# FASCICULE DE BREVET EUROPEEN

(11) **EP 0 469 048 B1**
(45) Date de publication et mention de la délivrance du brevet: **12.01.1994**
(21) Numéro de dépôt: 90907130.0
(22) Date de dépôt: 24.04.1990
(51) Int. Cl.: A01C 11/02, A01G 9/08

(54) **DISPOSITIF POUR LA MISE EN PLACE ET LE POSITIONNEMENT AUTOMATIQUE DE PLANTS**
VORRICHTUNG FÜR DAS ANBRINGEN UND DIE AUTOMATISCHE POSITIONIERUNG VON PFLANZEN
DEVICE FOR THE AUTOMATIC SETTING IN PLACE AND POSITIONING OF PLANTS

(30) Priorité: 24.04.1989 FR 8905570; 18.04.1990 FR 9005172
(43) Date de publication de la demande: 05.02.1992
(73) Titulaire: FERRAND, Claude, F-06200 Nice (FR)
(72) Inventeur: FERRAND, Claude, F-06200 Nice (FR)
(74) Mandataire: Roman, Michel
(86) Numéro de dépôt international: FR9000290
(87) Numéro de publication internationale: WO9012491

(56) Documents cités:
- EP-A- 067 141
- CA-A- 1 195 118
- DE-A- 2 455 759
- DE-C- 843 037
- FR-A- 2 560 482
- US-A- 2 835 419
- US-A- 4 388 035

## Description

La présente invention a pour objet un dispositif pour la mise en place et le positionnement automatique de végétaux.

Il est destiné à faciliter et automatiser la mise en place de plantes de toute nature, en leur conservant leur intégrité grâce à l'utilisation de moyens de manipulation non mécaniques.

Les dispositifs réalisés à ce jour ont recours soit à la mise en place manuelle, ce qui exige une main-d'oeuvre importante, soit à des systèmes mécanisés faisant appel à des robots équipés de pinces, aiguilles ou poussoirs, dont l'action sur les plants, surtout lorsqu'ils sont jeunes, et par conséquent délicats, risque d'entraîner des déteriorations au niveau des racines et des feuilles.

Le brevet N° US-A-4 388 035 décrit une machine comportant des éléments positionneurs associés à des têtes d'insufflation, et caractérisée en particulier par l'utilisation successive de trois insufflations d'air pour la mise en terre du plant. Cette machine est évidemment très complexe et, en raison de sa conception, présente des risques de lésions desdits plants nécessitant que ces derniers soient insérés dans un "bouchon" de terre avant les opérations de repiquage, ce qui augmente sensiblement le coût des opérations.

Le dispositif suivant la présente invention supprime tous ces inconvenients. En effet, il permet une automatisation complète des opérations de repiquage tout en supprimant totalement les risques de lésions des racines et des feuilles.

Il est constitué par la combinaison, d'une part, d'un élément positionneur vertical comportant un passage interne successivement conique en haut et cylindrique en bas, dans lequel est introduit par des moyens connus le végétal avec sa motte de terre, celle-ci prenant place dans la portion cylindrique alors que la partie aérienne du plant se trouve dans la partie conique évasée vers le haut, d'autre part, d'une tête d'insufflation équipée d'un joint d'étanchéité venant s'ajuster sur l'élément positionneur et permettent d'y injecter de l'air ou un gaz au moment ou l'ensemble se trouve au-dessus d'un trou préalablement effectué dans l'élément récepteur où doit prendre place le jeune plant.

Sur les dessins annexés, donnés à titre d'exemple non limitatif d'une des formes de réalisation de l'objet de l'invention:
la figure 1 est une coupe verticale schématique du dispositif,
la figure 2 montre, à une échelle différente, une réalisation dans laquelle plusieurs éléments assemblés forment une rampe,
la figure 3 représente en coupe verticale une variante de réalisation de l'élément positionneur.

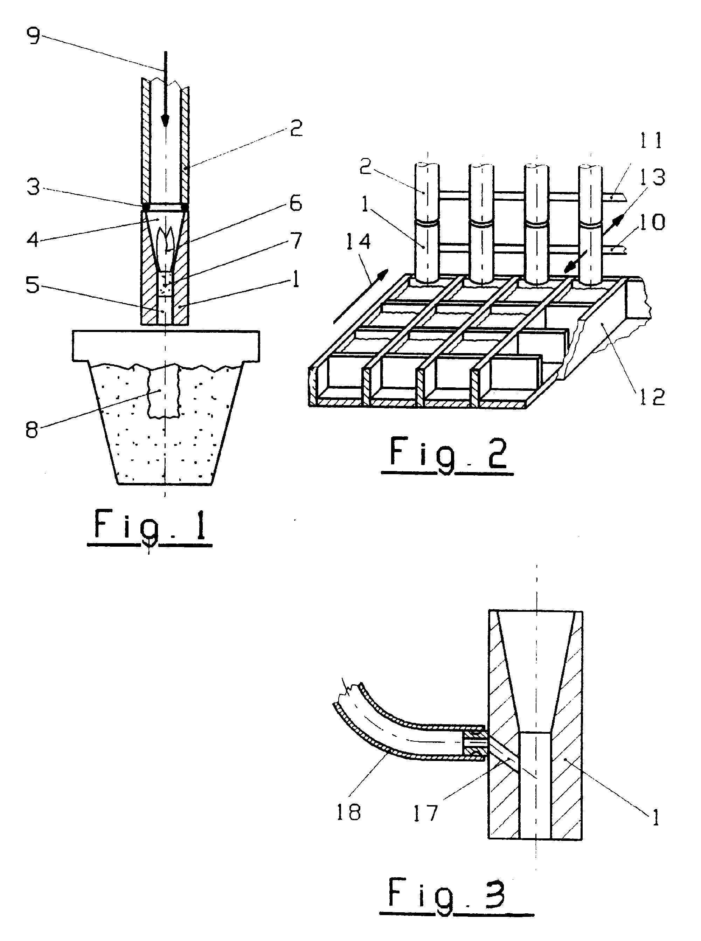

Le dispositif, figures 1 à 3, est constitué d'un élément positionneur 1 sur lequel un élément d'insufflation 2 peut venir s'ajuster par l'intermédiaire d'un joint d'étanchéité 3, une fois que le plant 6, 7 est inséré dans l'élément positionneur.

L'élément positionneur 1 comporte un passage interne vertical de section préférentiellement circulaire, mais pouvant également avoir une forme polygonale ou autre. Le haut du passage 4, destiné à recevoir la partie aérienne 6 du jeune plant, est conique et évasée vers le haut, alors que la portion basse 5 du passage reçoit la micro-motte de terre 7 attenant au végétal. La partie interne de l'élément positionneur 1 peut être interchangeable, de manière à s'adapter aux dimensions du végétal.

La tête d'insufflation 2 est raccordée à une source d'air comprimé ou de gaz commandée par un système (non décrit) déclanchant une impulsion suivant la flèche 9 au moment ou l'élément positionneur 1 est au dessus d'un trou 8 préalablement effectué à l'emplacement où doit avoir lieu la plantation, de manière à projeter le plant dans le susdit trou.

Il est possible de monter plusieurs éléments positionneurs 1 et plusieurs têtes d'insufflation 2 sur des châssis 10, 11 mobiles l'un par rapport à l'autre, pour constituer des rampes permettant la plantation de plusieurs plants à la fois, par exemple dans des casiers 12 (fig. 2) destinés au transport, les impulsions d'air ou de gaz étant synchronisées avec les mouvements relatifs indiqués par les flèches 13 et 14 des éléments positionneurs et des ensembles récepteurs 12.

Suivant une variante d'exécution, l'élément positionneur 1 peut être équipé d'un écarteur constitué d'une virole fixée à l'élément 1 par des entretoises et ayant pour but d'imposer un espace entre le dispositif et la terre et à empêcher celle-ci dêtre soufflée par l'air comprimé ou le gaz.

Suivant une seconde variante d'exécution (fig. 3) l'élément positionneur 1 peut être équipé d'un injecteur latéral 17 alimenté par un tube souple 18, permettant d'injecter de l'eau de nettoyage ou d'arrosage, ou d'autres produits tels que des engrais.

La partie inférieure de la tête d'insufflation 2 sera avantageusement prolongée par un poussoir rigide ou flexible, pénétrant dans l'élément positionneur 1 de manière à chasser le plant en appuyant sur la motte de terre 7, ce poussoir étant constitué de deux ou plusieurs tiges ou lamelles terminées par des renflements destinés à éviter de déteriorer le plant 6 ou la motte 7.

Grâce à l'économie de main-d'oeuvre qu'il permet, et à la suppression des risques de lésions des végétaux traités, le dispositif qui vient d'être décrit se prète particulièrement bien à la réalisation d'installations de repiquage, en particulier dans les exploitations agricoles importantes ou moyennes.

Le positionnement des divers éléments constitutifs donnent à ce dispositif un maximum d'effets utiles qui n'avaient pas été obtenus à ce jour par des dispositifs similaires.

## Revendications

1. Dispositif pour la mise en place et le positionnement automatique de végétaux, comportant un ou plusieurs éléments positionneurs (1) verticaux associés à une ou plusieurs têtes d'insufflation (2) et destiné à faciliter et automatiser la mise en place de plants de toute nature, en leur conservant leur intégrité et ayant pour objet la réalisation d'installations de repiquage dans les exploitations agricoles importantes ou moyennes,
caractérisé d'une part, par le fait que le ou les éléments positionneurs (1) vertical comportent un passage interne successivement conique en haut et cylindrique en bas, apte à recevoir le plant (6, 7) avec sa motte de terre (7), celle-ci prenant place dans la portion cylindrique (5) alors que la partie aérienne (6) du plant se trouve dans la partie conique (4) évasée vers le haut, et d'autre part, par le fait que chaque tête d'insufflation (2) vient s'ajuster sur l'élément positionneur (1) correspondant au moment où celui-ci se trouve au-dessus d'un trou (8) préalablement effectué dans l'élément récepteur (12) où doit prendre place le plant, un poussoir prolongeant la partie inférieure de la tête d'insufflation (2), et pénétrant par le haut à l'intérieur de l'élément positionneur (1) lors de la descente de ladite tête d'insufflation, de manière à chasser le plant (6, 7) au dehors en appuyant sur la motte de terre (7), ledit poussoir, dont l'action est complétée par une impulsion pneumatique synchronisée avec les mouvements relatifs des éléments positionneur (1) et récepteur (12), étant constitué de deux ou plusieurs tiges ou lamelles flexibles terminées par des renflements destinés à éviter de déteriorer la partie aérienne (6) ou la motte de terre (7) du plant.

2. Dispositif suivant la revendication 1 se caractérisant par le fait que l'élément positionneur (1) est équipé d'un écarteur constitué d'une virole fixée à l'élément (1) par des entretoises.

3. Dispositif suivant l'une quelconque des revendications précédentes, se caractérisant par le fait que l'élément positionneur (1) est équipé d'un injecteur latéral (17) alimenté par un tube souple (18), permettant d'injecter de l'eau de nettoyage ou d'arrosage, ou d'autres produits tels que des engrais.

## Patentansprüche

1. Vorrichtung zum automatischen Setzen und Positionieren von Pflanzen, bestehend aus einem oder mehreren vertikalen Setzelementen (1) in Verbindung mit einem oder mehreren Einsteckköpfen (2), dazu bestimmt, die Auspflanzung von Setzlingen aller Art zu erleichtern und zu automatisieren ohne sie zu beschädigen, mit dem Zweck Versetzinstallationen für große und mittlere Landwirtschaftsbetriebe zu schaffen,
dadurch gekennzeichnet, daß einerseits das bzw. die vertikalen Setzelemente (1) innen nacheinander im oberen Teil konisch und im unteren Teil zylindrisch ausgeführt sind, geeignet, den Setzling (6, 7) mit seinem Erdballen (7) aufzunehmen, wobei sich dieser letztere im zylindrischen Teil (5) und der aus der Erde ragende Setzling (6) in dem sich nach oben erweiternden konischen Teil (4) befindet, und, andererseits, jeweils der Einsteckkopf (2) auf das entsprechende Setzelement aufsetzt sobald sich dieses über einem Setzloch (8) befindet, welches vorher in dem Gefäß (12), das den Setzling aufnehmen soll, ausgeführt wurde wobei eine den unteren Teil des Einsteckkopfes (2) verlängernde Druckvorrichtung (31) beim Absenken des besagten Einsteckkopfes von oben in das Setzelement (1) eindringt, um auf diese Weise den Setzling (6, 7) durch Drücken auf den Erdballen (7) auszustoßen, und die besagte Druckvorrichtung, deren Aktion durch einen pneumatischen mit den jeweiligen Bewegungen der Setzelemente (1) und der Aufnahmebehältnisse (12) synchronisierten Impuls ergänzt wird, aus zwei oder mehreren Stiften oder biegsamen Lamellen besteht, die in einer Verdickung enden, dazu bestimmt, eine Beschädigung des aus der Erde ragenden Teils (6) bzw. des Erdballens (7) des Setzlings zu vermeiden.

2. Vorrichtung nach Anspruch 1, dadurch gekennzeichnet, daß das Setzelement (1) mit einem aus einem mit Abstandsstücken auf diesem Element (1) befestigten Spreizer versehen ist.

3. Vorrichtung nach irgendeinem der vorstehenden Ansprüche, dadurch gekennzeichnet, daß das Setzelement (1) mit einer seitlichen Düse (17) ausgerüstet ist, welche, über einen Schlauch (18) gespeist, das Einspritzen von Wasser zur Reinigung bzw. Bewässerung oder von anderen Produkten wie Düngemittel ermöglicht.

## Claims

1. Device for automatic positioning and planting out of plants, comprising one or several vertical positioners (1) associated with one or several blower heads (2) and designed to facilitate and automate planting out of plants of all kinds, while keeping them whole, for use on large and medium-size farms,
characterized on the one hand, by the vertical positioners (1) having successive conical internal passages at the top and cylindrical at the bottom, able to receive the plant (6, 7) with its root earth (7), which is positioned in the cylindrical section (5), whereas the aerial part (6) of the plant is in the conical section (4) which is flared towards the top, and, on the other, by each blower head (2) fitting onto the corresponding positioner (1) once this is in position above a hole (8) previously made in the receiving medium (12) in which the plant is to be planted, a thruster (31) prolonging the lower part (30) of the blower head (2), and penetrating downwards inside the positioner (1) when the said blower head descends so as to flush out the plant (6, 7) by applying pressure to the root earth (7), the said thruster, whose action is completed by an air pulse synchronized to the relative movements of the positioner (1) and receiver (12) elements, consisting of two or several flexible rods or slats terminated by vents (32) to avoid the aerial part (6) or the root earth (7) of the plant being damaged.

2. Device as per claim 1 characterized by the positioner (1) being equipped with a spacer comprising a shell fixed on element (1) by spacers.

3. Device as per any one of the above claims charaterized by the positioning element (1) being equipped with a lateral injecter (17) supplied by a flexible line (18) for injection of cleaning or plant water, or other products such as fertilizers.
